# EUROPEAN PATENT APPLICATION

(11) **EP 4 510 201 A1**
(43) Date of publication of application: **19.02.2025**
(21) Application number: 22964877.9
(22) Date of filing: 11.11.2022
(51) Int. Cl.: H01M 4/04

(54) **POSITIVE ELECTRODE SLURRY PREPARATION METHOD, POSITIVE ELECTRODE SHEET, SECONDARY BATTERY, AND ELECTRIC DEVICE**

(71) Applicant: Contemporary Amperex Technology Co., Limited, Ningde, Fujian 352100 (CN)
(72) Inventor: XING, Qi, Ningde, Fujian 352100 (CN); OUYANG, Chuying, Ningde, Fujian 352100 (CN); SUN, Chengdong, Ningde, Fujian 352100 (CN); LIU, Huihui, Ningde, Fujian 352100 (CN)
(74) Representative: Jacob, Reuben Ellis
(86) International application number: PCT/CN2022/131505
(87) International publication number: WO 2024/098409

(57) **Abstract**

The present application provides a positive electrode slurry preparation method, a positive electrode sheet, a secondary battery, and an electric device. The positive electrode slurry preparation method comprises first stirring, second stirring, third stirring, and fourth stirring. In the first stirring, a positive electrode active material and a binder are mixed and stirred to prepare a dry mixture. In the second stirring, the binder and a solvent are mixed and stirred to prepare a glue solution. In the third stirring, the dry mixture and the glue solution are mixed and stirred to prepare a primary slurry. In the fourth stirring, the positive electrode active material, a conductive agent, the solvent, and the primary slurry are mixed and stirred to prepare the positive electrode slurry. The binder used in the first stirring is the same as the binder used in the second stirring.

## Description

### TECHNICAL FIELD

The present application relates to the technical field of secondary batteries, and in particular to a preparation method of a positive electrode slurry, as well as a positive electrode plate, a secondary battery and an electrical apparatus.

### BACKGROUND

In recent years, with the increasingly wide use of secondary batteries, secondary batteries are widely used in energy storage power systems such as water power, thermal power, wind power and solar power stations, as well as power tools, electric bicycles, electric motorcycles, electric vehicles, military equipment, aerospace and other fields.

Electrode slurry is the basis for forming electrodes and is also the first process in secondary battery production. The properties of the electrode slurry have a significant impact on subsequent electrode production and battery performance. Positive electrode slurry is mainly a solid-liquid phase mixed system formed by positive electrode active materials, conductive agents, binders and solvents. The slurry preparation method in the prior art is often a one-step method, where the slurry is obtained by directly mixing and stirring the components in the positive electrode slurry. However, the one-step preparation method cannot meet the manufacturing needs of binders with different weight average molecular weights, and the slurry mixing process has poor versatility, which is not conducive to reducing manufacturing costs. Therefore, it is necessary to develop a new slurry preparation method that is suitable for binders with different weight average molecular weights.

### SUMMARY OF THE INVENTION

The present application is made in view of the above problems, and its purpose is to provide a preparation method of a positive electrode slurry that is suitable for binders with different weight average molecular weights.

A first aspect of the present application provides a preparation method of a positive electrode slurry, which includes a first stirring, a second stirring, a third stirring and a fourth stirring;
in the first stirring, a positive electrode active material and a binder are mixed and stirred to prepare a dry mixture;
in the second stirring, a binder and a solvent are mixed and stirred to prepare an adhesive solution;
in the third stirring, the dry mixture and the adhesive solution are mixed and stirred to prepare a primary slurry;
in the fourth stirring, a positive electrode active material, a conductive agent, a solvent and the primary slurry are mixed and stirred to prepare a positive electrode slurry;
the binder used in the first stirring is the same as the binder used in the second stirring.

The preparation method of the positive electrode slurry disclosed in the present application is more versatile than the existing preparation methods of the positive electrode slurry, and is suitable for slurries comprising binders with different weight average molecular weights. Compared with the existing preparation methods, the present application adds the binder for multiple times for slurry mixing, so that the binder can be evenly coated on the positive electrode active material, and the binder can be effectively dispersed in the slurry to avoid serious agglomeration of the binder, thereby increasing the applicability of the preparation method of the present application to large molecular weight binders, improving the versatility of the slurry preparation method, and reducing manufacturing costs.

In any of embodiments, the binder includes at least one polyvinylidene fluoride having a weight average molecular weight of 1 million to 8 million.

The preparation method disclosed in the present application has universal applicability to low molecular weight polyvinylidene fluoride binders and high molecular weight polyvinylidene fluoride binders, broadens the coating window of the slurry, and still has suitable viscosity for a slurry comprising binders with a weight average molecular weight as high as 8 million while ensuring that the electrode plate has excellent binding performance, which can meet the needs of the new generation of binders.

In any of embodiments, the binder comprises at least two kinds of polyvinylidene fluoride whose weight average molecular weight difference is not more than 7 million.

The positive electrode slurry prepared by the preparation method disclosed in the present application can effectively exert the properties of polyvinylidene fluoride binders of different molecular weights. Through the mutual cooperation and steric hindrance of large and small chain segments, the slurry has appropriate viscosity while ensuring that the electrode plate has high binding force, shear strength and cohesion.

In any of embodiments, based on the total mass of the binder used in the first stirring and the binder used in the second stirring, the mass content of the binder used in the first stirring is 30%-50%, and the mass content of the binder used in the second stirring is 50%-70%.

The mass content of the binder used in the first stirring is controlled to be 30%-50%, and the mass content of the binder used in the second stirring is controlled to be 50%-70%, based on the total mass of the binder used in the first stirring and the binder used in the second stirring, which can ensure that the slurry viscosity is within an appropriate range and that the electrode plate has high binding force, shear strength and cohesion, thereby broadening the electrode plate preparation process window while improving the binding performance of the electrode plate.

In any of embodiments, the revolution velocity of the first stirring is 10 rpm to 20 rpm.

Controlling the revolution velocity of the first stirring to be 10 rpm to 20 rpm can not only ensure that the slurry viscosity is within a suitable range, but also ensure that the electrode plate has high binding force, shear strength and cohesion, which broadens the electrode plate preparation process window while improving the binding performance of the electrode plate.

In any of embodiments, the rotation velocity of the first stirring is 0.

The rotation velocity of the first stirring is controlled to be 0, which reduces the shear force of the first stirring, reduces the possibility of the positive electrode active material and the binder being excessively broken, ensures that the positive electrode active material and the binder have a certain particle size and specific surface area, helps to improve the dispersion effect of the positive electrode active material and the binder, reduces the viscosity of the slurry, and improves the binding force, shear strength and cohesion of the electrode plate.

In any of embodiments, the stirring time of the first stirring is 10 min to 20 min.

Controlling the stirring time of the first stirring to be 10 min to 20 min can not only ensure that the slurry viscosity is within a suitable range, but also ensure that the electrode plate has high binding force, shear strength and cohesion, which broadens the electrode plate preparation process window while improving the binding performance of the electrode plate.

In any of embodiments, the revolution velocity of the second stirring is 20 rpm to 30 rpm.

Controlling the revolution velocity of the second stirring to be 20 rpm to 30 rpm can not only ensure that the slurry viscosity is within a suitable range, but also ensure that the electrode plate has high binding force, shear strength and cohesion, which broadens the electrode plate preparation process window while improving the binding performance of the electrode plate.

In any of embodiments, the rotation velocity of the second stirring is 1100 rpm to 1300 rpm.

Controlling the rotation velocity of the second stirring to be 1100 rpm to 1300 rpm can not only ensure that the slurry viscosity is within a suitable range, but also ensure that the electrode plate has high binding force, shear strength and cohesion. It can also avoid excessive load on the equipment caused by excessive rotation velocity of the second stirring to affect the service life of the equipment, thereby reducing cost losses.

In any of embodiments, the stirring time of the second stirring is 60 min to 80 min.

Controlling the stirring time of the second stirring to be 60 min to 80 min can not only ensure that the slurry viscosity is within a suitable range, but also ensure that the electrode plate has high binding force, shear strength and cohesion. It can also avoid the reduction of production efficiency caused by too long stirring time of the second stirring, and save the production cost.

In any of embodiments, the revolution velocity of the third stirring is 20 rpm to 30 rpm.

Controlling the revolution velocity of the third stirring to be 20 rpm to 30 rpm can not only ensure that the slurry viscosity is within a suitable range, but also ensure that the electrode plate has high binding force, shear strength and cohesion. It can also avoid excessive load on the equipment caused by excessive revolution velocity of the third stirring to affect the service life of the equipment, thereby reducing cost losses.

In any of embodiments, the rotation velocity of the third stirring is 500 rpm to 800 rpm.

Controlling the rotation velocity of the third stirring to be 500 rpm to 800 rpm can not only ensure that the slurry viscosity is within a suitable range, but also ensure that the electrode plate has high binding force, shear strength and cohesion. It can also avoid excessive load on the equipment caused by excessive rotation velocity of the third stirring to affect the service life of the equipment, thereby reducing cost losses.

In any of embodiments, the stirring time of the third stirring is 40 min to 60 min.

Controlling the stirring time of the third stirring to be 40 min to 60 min can not only ensure that the slurry viscosity is within a suitable range, but also ensure that the electrode plate has high binding force, shear strength and cohesion. It can also avoid the reduction of production efficiency caused by too long stirring time of the third stirring, and save the production cost.

In any of embodiments, the revolution velocity of the fourth stirring is 20 rpm to 30 rpm.

Controlling the revolution velocity of the fourth stirring to be 20 rpm to 30 rpm can not only ensure that the slurry viscosity is within a suitable range, but also ensure that the electrode plate has high binding force, shear strength and cohesion. It can also avoid excessive load on the equipment caused by excessive revolution velocity of the fourth stirring to affect the service life of the equipment, thereby reducing cost losses.

In any of embodiments, the rotation velocity of the fourth stirring is 1100 rpm to 1400 rpm.

Controlling the rotation velocity of the fourth stirring to be 1100 rpm to 1400 rpm can not only ensure that the slurry viscosity is within a suitable range, but also ensure that the electrode plate has high binding force, shear strength and cohesion. It can also avoid excessive load on the equipment caused by excessive rotation velocity of the fourth stirring to affect the service life of the equipment, thereby reducing cost losses.

In any of embodiments, the stirring time of the fourth stirring is 100 min to 120 min.

Controlling the stirring time of the fourth stirring to be 100 min to 120 min can not only ensure that the slurry viscosity is within a suitable range, but also ensure that the electrode plate has high binding force, shear strength and cohesion. It can also avoid the reduction of production efficiency caused by too long stirring time of the fourth stirring, and save the production cost.

In any of embodiments, when the solid content of the positive electrode slurry is 68%, the viscosity of the positive electrode slurry is 8000 mPa·s to 41000 mPa·s.

The viscosity of the positive electrode slurry with a solid content of 68% is 8000 mPa·s to 41000 mPa·s, and the positive electrode slurry has good coatability and processability, which widens the process window of slurry coating.

In any of embodiments, the positive electrode active material used in the first stirring and the positive electrode active material used in the fourth stirring are the same, and based on the total mass of the positive electrode active material used in the first stirring and the positive electrode active material used in the fourth stirring, the mass content of the positive electrode active materials used in the first stirring is 50%-70%, and the mass content of the positive electrode active materials used in the fourth stirring is 30%-50%.

The mass content of the positive electrode active material used in the first stirring is controlled to be 50%-70%, and the mass content of the positive electrode active material used in the fourth stirring to be 30%-50%, based on the total mass of the positive electrode active material used in the first stirring and the positive electrode active material used in the fourth stirring, which can reduce the viscosity of the slurry, increase the binding force, shear strength and cohesion of the electrode plate, and broaden the process window of slurry coating while improving the performance of the electrode plate.

In any of embodiments, the solvent used in the second stirring and the solvent used in the fourth stirring are the same, and based on the total mass of the conductive agent, the positive electrode active material used in the first stirring, the positive electrode active material used in the fourth stirring, the binder used in the first stirring and the binder used in the second stirring, the mass content of the solvent used in the second stirring is 35%-40%, and the mass content of the solvent used in the fourth stirring is 5%-10%.

In any of embodiments, in the positive electrode slurry, the ratio between the total mass of the positive electrode active materials, the total mass of the binders, and the mass of the conductive agent is (86-98):(1-8):(1-6). The positive electrode slurry within the above range not only has good processability, but also makes the formed positive electrode plate have excellent binding performance and electrochemical performance.

**In** any of embodiments, the positive electrode active material is one or more of lithium iron phosphate, lithium cobalt oxide, lithium manganate, and lithium nickel cobalt manganese oxide. The above-mentioned positive electrode active material enables the battery to have high energy density, which is conducive to improving the cycling performance of the battery.

In any of embodiments, the conductive agent is one or more of conductive carbon black, graphite, and carbon nanotubes. The above-mentioned conductive agent is beneficial to improving the conductivity of the battery.

A second aspect of the present application provides a positive electrode plate, which comprises a positive electrode current collector and a positive electrode film layer arranged on at least one surface of the positive electrode current collector, and the positive electrode film layer is prepared from the positive electrode slurry prepared by the preparation method according to the first aspect of the present application.

In any of embodiments, the binding force per unit length between the positive electrode film layer and the positive electrode current collector is 20 N/m to 30 N/m.

In any of embodiments, the shear strength of the positive electrode film layer is 0.64 mPa to 0.91mPa.

In any of embodiments, the cohesion of the positive electrode film layer is 70 N/m to 90 N/m.

A third aspect of the present application provides a secondary battery comprising an electrode assembly and an electrolyte solution, wherein the electrode assembly comprises a separator, a negative electrode plate and the positive electrode plate according to the second aspect of the present application.

In any of embodiments, the secondary battery is any one of a lithium-ion battery, a sodium-ion battery, a magnesium-ion battery, and a potassium-ion battery.

A fourth aspect of the present application provides a battery module comprising the secondary battery of the third aspect of the present application.

A fifth aspect of the present application provides a battery pack comprising the secondary battery of the third aspect of the present application or the battery module of the fourth aspect of the present application.

A sixth aspect of the present application provides an electrical apparatus comprising at least one selected from the secondary battery of the third aspect of the present application, the battery module of the fourth aspect of the present application, or the battery pack of the fifth aspect of the present application.

### DESCRIPTION OF DRAWINGS

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic view of an electrical apparatus in which a secondary battery is used as a power source according to an embodiment of the present application.

### Description of reference numerals:

1 battery pack; 2 upper box; 3 lower box; 4 battery module; 5 secondary battery; 51 case; 52 electrode assembly; 53 cover plate.

### DETAILED DESCRIPTION

Hereinafter, embodiments of the binder, preparation method, electrode plate, battery, and electrical apparatus of the present application are described in detail and specifically disclosed with reference to the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Positive electrode slurry is mainly a solid-liquid phase mixed system formed by positive electrode active materials, conductive agents, binders and solvents. The slurry preparation method in the prior art can only be applied to slurries comprising low molecular weight binders and cannot meet the manufacturing needs of a new generation of high molecular weight binders. The applicant's research found that high molecular weight binders help increase the loading of active materials in the electrode plates, which is beneficial to improving the energy density and capacity of the battery. However, in the slurry preparation method in the prior art, when a slurry comprising a high molecular weight binder is formed, the viscosity of the slurry rises sharply, resulting in difficulty in coating and a decrease in electrode plate performance.

### [Preparation method of positive electrode slurry]

Based on this, the present application proposes a preparation method of a positive electrode slurry, which includes a first stirring, a second stirring, a third stirring and a fourth stirring; in the first stirring, a positive electrode active material and a binder are mixed and stirred to prepare a dry mixture; in the second stirring, a binder and a solvent are mixed and stirred to prepare an adhesive solution; in the third stirring, the dry mixture and the adhesive solution are mixed and stirred to prepare a primary slurry; in the fourth stirring, a positive electrode active material, a conductive agent, a solvent and the primary slurry are mixed and stirred to prepare a positive electrode slurry; the binder used in the first stirring is the same as the binder used in the second stirring.

In this preparation method, the positive electrode active material and part of the binder are subjected to the first stirring to obtain the dry mixture, the first stirring causes the two to be mechanically riveted to form tight entanglement; and then the remaining binder and part of the solvent are mixed for the second stirring to obtain the adhesive solution, the second stirring helps the binder to be evenly dispersed in the solvent; then the dry mixture prepared by the first stirring and the adhesive solution prepared by the second stirring are subjected to the third stirring to obtain the primary slurry, the third stirring helps the positive electrode active material to be evenly dispersed in the primary slurry system, and the positive electrode active material can be evenly coated and entangled with the binder; finally, the remaining positive electrode active material, conductive agent, solvent and primary slurry are subjected to the fourth stirring to obtain the positive electrode slurry, the fourth stirring helps the conductive agent and the positive electrode active material to be fully mixed, so that the positive electrode active material and the conductive agent are evenly dispersed in the slurry, and the binder is evenly coated on the surface of the positive electrode active material and the conductive agent.

According to the present application, through stepwise slurry mixing, the binder can be evenly coated on the positive electrode active material and the conductive agent, the binder and the positive electrode active material can be effectively dispersed in the slurry while avoiding serious agglomeration of the binder, thereby increasing the applicability of the preparation method to large molecular weight binders, improving the versatility of the slurry preparation method, and reducing manufacturing costs.

In some embodiments, the binder includes at least one polyvinylidene fluoride having a weight average molecular weight of 1 million to 8 million. In some embodiments, the weight average molecular weight of polyvinylidene fluoride is optionally any one of 1 million, 1.5 million, 2 million, 2.5 million, 3 million, 3.5 million, 4 million, 4.5 million, 5 million, 5.5 million, 6 million, 6.5 million, 7 million, 7.5 million, 8 million.

Herein, the term "weight average molecular weight" refers to the average molecular weight of a polymer in unit weight, according to the statistical average molecular weight of the polymer by mass.

In the present application, the weight average molecular weight of a polymer can be tested using methods known in the art, such as gel chromatography, such as using Waters 2695 Isocratic HPLC gel chromatograph (differential refractive index detector 2141 ). A polystyrene solution sample with a mass fraction of 3.0% is used as the reference, and a matching chromatographic column (oily: Styragel HT5 DMF 7.8×300 mm + Styragel HT4) is selected. A 3.0% binder solution is prepared using purified N-methylpyrrolidone (NMP) solvent, and the prepared solution is allowed to stand for one day for later use. When testing, tetrahydrofuran is drawn in with a syringe first for rinsing, which is repeated several times. Then 5 ml of the test solution is drawn in, the air in the syringe is removed, and the needle tip is wiped dry. Finally, the sample solution is slowly injected into the injection port. After the display is stable, the data is obtained and the weight average molecular weight is read.

The preparation method disclosed in the present application allows the slurry comprising a polyvinylidene fluoride binder with a weight average molecular weight of up to 8 million to still have appropriate viscosity, and the binding force, shear strength and cohesion of its electrode plates all meet product requirements, which can meet the demand for the use of a new generation of high molecular weight binders.

In some embodiments, the binder comprises at least two kinds of polyvinylidene fluoride whose weight average molecular weight difference is not more than 7 million. In some embodiments, the difference in weight average molecular weight of two or more kinds of polyvinylidene fluoride is optionally any one of 0.1 million, 0.5 million, 1 million, 1 million, 2 million, 3 million, 4 million, 5 million, 6 million, and 7 million.

The positive electrode slurry prepared by the preparation method disclosed in the present application can effectively exert the properties of polyvinylidene fluoride binders of different molecular weights. Through the mutual cooperation and steric hindrance of large and small chain segments, the slurry has appropriate viscosity and the positive electrode plate prepared from the slurry has high binding force, shear strength and cohesion.

Herein, the binding force is mainly used to characterize the binding strength between the film layer prepared from the positive electrode slurry and the current collector in the positive electrode plate, which can be tested by any known method.

Herein, the shear strength is mainly used to characterize the anti-shear strength of the film layer prepared from the positive electrode slurry in the positive electrode plate, which can be tested by any known method.

Herein, the cohesion is mainly used to characterize the cohesive force inside the film layer prepared from the positive electrode slurry in the positive electrode plate, and can reflect the binding strength between the positive electrode active material and the binder, which can be tested by any known method.

In some embodiments, based on the total mass of the binder used in the first stirring and the binder used in the second stirring, the mass content of the binder used in the first stirring is 30%-50%, and the mass content of the binder used in the second stirring is 50%-70%.

In some embodiments, the mass content of the binder used in the first stirring can be selected from 30%, 35%, 40%, 45% or 50%, and the mass content of the binder used in the second stirring can be selected from 50%, 55%, 60%, 65% or 70%, based on the total mass of the binder used in the first stirring and the binder used in the second stirring.

If the mass content of the binder used in the first stirring is too small or the mass content of the binder used in the second stirring is too large, the mass of the binder coated on the surface of the positive electrode active material in the first stirring will be too low and the viscosity of the adhesive solution prepared in the second stirring will be too large, making it impossible to achieve effective coating of the binder on the surface of the positive electrode active material. As a result, the positive electrode active material cannot be effectively dispersed in the adhesive solution, the viscosity of the slurry is too high, it is difficult for the binder to be dispersed in the positive electrode active material to exert its binding performance, resulting in a decrease in the binding force, shear strength and cohesion of the electrode plate.

If the mass content of the binder used in the first stirring is too high or the mass content of the binder used in the second stirring is too small, the mass of the binder coated on the surface of the positive electrode active material in the first stirring will be too high, which easily leads to mutual entanglement between the binders, and is not conducive to mechanical riveting through the mutual cooperation of surfaces between the positive electrode active material and the binder, resulting in the failure to improve the binding force, shear strength and cohesion of the electrode plate.

The mass content of the binder used in the first stirring is controlled to be 30%-50%, and the mass content of the binder used in the second stirring is controlled to be 50%-70%, based on the total mass of the binder used in the first stirring and the binder used in the second stirring, which can ensure that the slurry viscosity is within an appropriate range and that the electrode plate has high binding force, shear strength and cohesion, thereby broadening the electrode plate preparation process window while improving the binding performance of the electrode plate.

Herein, the term "process window" refers to the process range that can ensure product quality, including but not limited to temperature range, pressure range, storage time length, etc. It can be understood that the wider the process window, the lower the demand for process accuracy.

In some embodiments, the revolution velocity of the first stirring is 10 rpm to 20 rpm. In some embodiments, the revolution velocity of the first stirring is optionally any one of 10 rpm, 12 rpm, 15 rpm, 18 rpm, and 20 rpm.

In some embodiments, the stirring time of the first stirring is 10 min to 20 min. In some embodiments, the stirring time of the first stirring is optionally any one of 10 min, 12 min, 15 min, 18 min, 20 min.

Herein, the term "revolution velocity" refers to the speed at which the stirrer rotates around the kettle loaded with the material.

In some embodiments, the stirrer is a planetary stirrer. The working principle of the planetary stirrer is that after the stirrer is started, the planet carrier rotates, driving the stirring shaft in the box to rotate. It rotates at a high speed while revolving around the axis of the barrel, so that the material is subjected to strong shearing and kneading. It can be understood that the preparation method provided in the present application is suitable for any type of planetary stirrer.

If the revolution velocity of the first stirring is too small or the stirring time is too short, the positive electrode active material and the binder cannot be effectively mixed, the viscosity of the slurry will be too high, and the binding performance of the electrode plate will be poor; if the revolution velocity of the first stirring is too large or the stirring time is too long, the positive electrode active material and the binder will be easily broken, resulting in a decrease in the binding performance of the binder and a decrease in the binding force, shear strength and cohesion of the electrode plate.

To sum up, controlling the revolution velocity of the first stirring to be 10 rpm to 20 rpm or the stirring time of the first stirring to be 10 min to 20 min can not only ensure that the slurry viscosity is within a suitable range, but also ensure that the electrode plate has high binding force, shear strength and cohesion, which broadens the electrode plate preparation process window while improving the binding performance of the electrode plate.

In some embodiments, the rotation velocity of the first stirring is 0.

Herein, the term "rotation velocity" refers to the speed at which the stirrer rotates about its own axis.

The rotation velocity of the first stirring is controlled to be 0, which reduces the shear force of the first stirring, reduces the possibility of the positive electrode active material and the binder being excessively broken, ensures that the positive electrode active material and the binder have a certain particle size and specific surface area, helps to improve the dispersion effect of the positive electrode active material and the binder, reduces the viscosity of the slurry, and improves the binding force, shear strength and cohesion of the positive electrode plate prepared from the slurry.

In some embodiments, the revolution velocity of the second stirring is 20 rpm to 30 rpm. In some embodiments, the revolution velocity of the second stirring is optionally any one of 10 rpm, 15 rpm, 20 rpm, 25 rpm, and 30 rpm.

If the revolution velocity of the second stirring is too small, the binder cannot be effectively dispersed in the solvent, the viscosity of the slurry will be too high, and the binding performance of the positive electrode plate will be poor, which cannot meet the needs of the product; if the revolution velocity of the second stirring is too high, there is a risk that the binder will be broken, resulting in a reduction in molecular chains and a decrease in binding performance.

Controlling the revolution velocity of the second stirring to be 20 rpm to 30 rpm can not only ensure that the slurry viscosity is within a suitable range, but also ensure that the electrode plate has high binding force, shear strength and cohesion, which broadens the electrode plate preparation process window while improving the binding performance of the electrode plate.

In some embodiments, the rotation velocity of the second stirring is 1100 rpm to 1300 rpm. In some embodiments, the rotation velocity of the second stirring is optionally any one of 1100 rpm, 1150 rpm, 1200 rpm, 1250 rpm, and 1300 rpm.

If the rotation velocity of the second stirring is too small, the binder cannot be effectively dispersed in the solvent, the viscosity of the slurry will be too high, and the binding performance of the positive electrode plate will be poor, which cannot meet the needs of the product; if the rotation velocity of the second stirring is too large, the too fast rotation velocity will increase the load on the equipment, affect the service life of the equipment, and increase production costs without significantly improving the viscosity of the slurry, as well as the binding force, shear strength and cohesion of the electrode plates.

Controlling the rotation velocity of the second stirring to be 1100 rpm to 1300 rpm can not only ensure that the slurry viscosity is within a suitable range, but also ensure that the electrode plate has high binding force, shear strength and cohesion. It can also avoid excessive load on the equipment caused by excessive rotation velocity of the second stirring to affect the service life of the equipment, thereby reducing cost losses.

In some embodiments, the stirring time of the second stirring is 60 min to 80 min. In some embodiments, the stirring time of the second stirring is optionally any one of 60 min, 65 min, 70 min, 75 min, 80 min.

If the stirring time of the second stirring is too short, the binder cannot be effectively dispersed in the solvent, the viscosity of the slurry will be too high, and the binding performance of the positive electrode plate will be poor, which cannot meet the needs of the product; if the stirring time of the second stirring is too long, the too long stirring time will lead to a waste of energy and reduce production efficiency without significantly improving the viscosity of the slurry, as well as the binding force, shear strength and cohesion of the electrode plates.

Controlling the stirring time of the second stirring to be 60 min to 80 min can not only ensure that the slurry viscosity is within a suitable range, but also ensure that the electrode plate has high binding force, shear strength and cohesion. It can also avoid the reduction of production efficiency caused by too long stirring time of the second stirring, and save the production cost.

In some embodiments, the revolution velocity of the third stirring is 20 rpm to 30 rpm. In some embodiments, the revolution velocity of the third stirring is optionally any one of 20 rpm, 22 rpm, 25 rpm, 28 rpm, and 30 rpm.

If the revolution velocity of the third stirring is too small, the dry mixture and the adhesive solution cannot be mixed evenly, that is, the positive electrode active material and the binder cannot be effectively dispersed in the solvent, the viscosity of the slurry will be too high, and the binding performance of the positive electrode plate will be poor, which cannot meet the needs of the product; if the revolution velocity of the third stirring is too large, a too high rotation velocity will increase the load on the equipment, affect the service life of the equipment, and increase production costs without significantly improving the viscosity of the slurry, as well as the binding force, shear strength and cohesion of the electrode plates.

Controlling the revolution velocity of the third stirring to be 20 rpm to 30 rpm can not only ensure that the slurry viscosity is within a suitable range, but also ensure that the electrode plate has high binding force, shear strength and cohesion. It can also avoid excessive load on the equipment caused by excessive revolution velocity of the third stirring to affect the service life of the equipment, thereby reducing cost losses.

In some embodiments, the rotation velocity of the third stirring is 500 rpm to 800 rpm. In some embodiments, the rotation velocity of the third stirring is optionally any one of 500 rpm, 600 rpm, 700 rpm, 750 rpm, and 800 rpm.

If the rotation velocity of the third stirring is too small, the dry mixture and the adhesive solution cannot be mixed evenly, that is, the positive electrode active material and the binder cannot be effectively dispersed in the solvent, the viscosity of the slurry will be too high, and the binding performance of the positive electrode plate will be poor, which cannot meet the needs of the product; if the rotation velocity of the third stirring is too large, a too high rotation velocity will increase the load on the equipment, affect the service life of the equipment, and increase production costs without significantly improving the viscosity of the slurry, as well as the binding force, shear strength and cohesion of the electrode plates.

Controlling the rotation velocity of the third stirring to be 500 rpm to 800 rpm can not only ensure that the slurry viscosity is within a suitable range, but also ensure that the electrode plate has high binding force, shear strength and cohesion. It can also avoid excessive load on the equipment caused by excessive rotation velocity of the third stirring to affect the service life of the equipment, thereby reducing cost losses.

In some embodiments, the stirring time of the third stirring is 40 min to 60 min. In some embodiments, the stirring time of the third stirring is optionally any one of 40 min, 45 min, 50 min, 55 min, 60 min.

If the stirring time of the third stirring is too short, the dry mixture and the adhesive solution cannot be mixed evenly, that is, the positive electrode active material and the binder cannot be effectively dispersed in the solvent, the viscosity of the slurry will be too high, and the binding performance of the positive electrode plate will be poor, which cannot meet the needs of the product; if the stirring time of the third stirring is too long, the too long stirring time will lead to a waste of energy and reduce production efficiency without significantly improving the viscosity of the slurry, as well as the binding force, shear strength and cohesion of the electrode plates.

Controlling the stirring time of the third stirring to be 40 min to 60 min can not only ensure that the slurry viscosity is within a suitable range, but also ensure that the electrode plate has high binding force, shear strength and cohesion. It can also avoid the reduction of production efficiency caused by too long stirring time of the third stirring, and save the production cost.

In some embodiments, the revolution velocity of the fourth stirring is 20 rpm to 30 rpm. In some embodiments, the revolution velocity of the fourth stirring is optionally any one of 20 rpm, 23 rpm, 25 rpm, 27 rpm, and 30 rpm.

If the revolution velocity of the fourth stirring is too small, the positive electrode active material, the binder and the conductive agent cannot be effectively dispersed in the solvent, the viscosity of the slurry will be too high, and the binding performance of the positive electrode plate will be poor, which cannot meet the needs of the product; if the revolution velocity of the fourth stirring is too large, a too high rotation velocity will increase the load on the equipment, affect the service life of the equipment, and increase production costs without significantly improving the viscosity of the slurry, as well as the binding force, shear strength and cohesion of the electrode plates.

Controlling the revolution velocity of the fourth stirring to be 20 rpm to 30 rpm can not only ensure that the slurry viscosity is within a suitable range, but also ensure that the electrode plate has high binding force, shear strength and cohesion. It can also avoid excessive load on the equipment caused by excessive revolution velocity of the fourth stirring to affect the service life of the equipment, thereby reducing cost losses.

In some embodiments, the rotation velocity of the fourth stirring is 1100 rpm to 1400 rpm. In some embodiments, the rotation velocity of the fourth stirring is optionally any one of 1100 rpm, 1150 rpm, 1200 rpm, 1250 rpm, 1300 rpm and 1400 rpm.

If the rotation velocity of the fourth stirring is too small, the positive electrode active material, the binder and the conductive agent cannot be effectively dispersed in the solvent, the viscosity of the slurry will be too high, and the binding performance of the positive electrode plate will be poor, which cannot meet the needs of the product; if the rotation velocity of the fourth stirring is too large, a too high rotation velocity will increase the load on the equipment, affect the service life of the equipment, and increase production costs without significantly improving the viscosity of the slurry, as well as the binding force, shear strength and cohesion of the electrode plates.

Controlling the rotation velocity of the fourth stirring to be 1100 rpm to 1400 rpm can not only ensure that the slurry viscosity is within a suitable range, but also ensure that the electrode plate has high binding force, shear strength and cohesion. It can also avoid excessive load on the equipment caused by excessive rotation velocity of the fourth stirring to affect the service life of the equipment, thereby reducing cost losses.

In some embodiments, the stirring time of the fourth stirring is 100 min to 120 min. In some embodiments, the stirring time of the fourth stirring is optionally any one of 100 min, 105 min, 110 min, 115 min, 120 min.

If the stirring time of the fourth stirring is too short, the positive electrode active material, the binder and the conductive agent cannot be effectively dispersed in the solvent, the viscosity of the slurry will be too high, and the binding performance of the positive electrode plate will be poor, which cannot meet the needs of the product; if the stirring time of the fourth stirring is too long, the too long stirring time will lead to a waste of energy and reduce production efficiency without significantly improving the viscosity of the slurry, as well as the binding force, shear strength and cohesion of the electrode plates.

Controlling the stirring time of the fourth stirring to be 100 min to 120 min can not only ensure that the slurry viscosity is within a suitable range, but also ensure that the electrode plate has high binding force, shear strength and cohesion. It can also avoid the reduction of production efficiency caused by too long stirring time of the fourth stirring, and save the production cost.

In some embodiments, when the solid content of the positive electrode slurry is 68%, the viscosity of the positive electrode slurry is 8000 mPa·s to 41000 mPa·s. In some embodiments, the viscosity of the positive electrode slurry is optionally any one of 8000 mPa·s, 9000 mPa·s, 10000 mPa·s, 11000 mPa·s, 12000 mPa·s, 13000 mPa·s, 14000 mPa·s, 15000 mPa·s, 16000 mPa·s, 17000 mPa·s, 18000 mPa·s, 19000 mPa·s, 20000 mPa·s, 22000 mPa·s, 24000 mPa·s, 25000 mPa·s, 26000 mPa·s, 28000 mPa·s, 30000 mPa·s, 32000 mPa·s, 34000 mPa·s, 35000 mPa·s, 36000 mPa·s, 38000 mPa·s, 40000 mPa·s, 41000 mPa·s.

In the present application, the viscosity of the positive electrode slurry can be tested using methods known in the art, such as using a rotational viscometer. For example, it comprises selecting a suitable rotor, fixing the viscometer rotor, and placing the positive electrode slurry under the viscometer rotor to allow the slurry to just submerge the scale line of the rotor; instrument model: Shanghai Fangrui NDJ-5S. To measure the slurry viscosity of 2000-10000 mPa·s, No. 63 rotor is used, and to measure the slurry viscosity of 10000-50000 mPa·s, No. 64 rotor is used. The rotational velocity is 12 rpm, the test temperature is 25°C, the test time is 5 min, and the data is read after it becomes stable.

The viscosity of the positive electrode slurry with a solid content of 68% is 8000 mPa·s to 41000 mPa·s, and the positive electrode slurry has good coatability and processability, which widens the process window of coating.

In some embodiments, the positive electrode active material used in the first stirring and the positive electrode active material used in the fourth stirring are the same, and based on the total mass of the positive electrode active material used in the first stirring and the positive electrode active material used in the fourth stirring, the mass content of the positive electrode active materials used in the first stirring is 50%-70%, and the mass content of the positive electrode active materials used in the fourth stirring is 30%-50%.

In some embodiments, the mass content of the positive electrode active material used in the first stirring can be selected from 50%, 53%, 55%, 58%, 60%, 62%, 67% or 70%, and the mass content of the positive electrode active material used in the fourth stirring can be selected from 30%, 33%, 38%, 40%, 42%, 45%, 47% or 50%, based on the total mass of the positive electrode active material used in the first stirring and the positive electrode active material used in the fourth stirring.

If the mass content of the positive electrode active material used in the first stirring is too small, that is, the mass content of the positive electrode active material used in the fourth stirring is too large, it is not conducive to controlling the dispersion of the positive electrode active material in the slurry in the fourth stirring, resulting in excessive viscosity of the slurry and poor binding performance of the positive electrode plate; if the mass content of the positive electrode active material used in the first stirring is too large, that is, the mass content of the positive electrode active material used in the fourth stirring is too small, it is not conducive to controlling the mechanical riveting between the positive electrode active material and the binder in the first stirring, leading to poor dispersion of the dry mixture prepared in the first stirring in the subsequent slurry, excessive viscosity of the slurry, and poor binding performance of the positive electrode plate.

The mass content of the positive electrode active material used in the first stirring is controlled to be 50%-70%, and the mass content of the positive electrode active material used in the fourth stirring to be 30%-50%, based on the total mass of the positive electrode active material used in the first stirring and the positive electrode active material used in the fourth stirring, which can reduce the viscosity of the slurry, increase the binding force, shear strength and cohesion of the electrode plate, and broaden the process window of slurry coating while improving the performance of the electrode plate.

In some embodiments, the solvent used in the second stirring and the solvent used in the fourth stirring are the same, and based on the total mass of the conductive agent, the positive electrode active material used in the first stirring, the positive electrode active material used in the fourth stirring, the binder used in the first stirring and the binder used in the second stirring, the mass content of the solvent used in the second stirring is 35%-40%, and the mass content of the solvent used in the fourth stirring is 5%-10%.

In some embodiments, the mass content of the solvent used in the second stirring can be selected from 35%, 36%, 37%, 38%, 39% or 40%, and the mass content of the solvent used in the fourth stirring can be selected from 5%, 6%, 7%, 8%, 9% or 10%, based on the total mass of the conductive agent, the positive electrode active material used in the first stirring, the positive electrode active material used in the fourth stirring, the binder used in the first stirring and the binder used in the second stirring.

In some embodiments, in the positive electrode slurry, the ratio between the total mass of the positive electrode active materials, the total mass of the binders, and the mass of the conductive agent is (86-98):(1-8):(1-6). In some embodiments, the ratio between the total mass of the positive electrode active materials, the total mass of the binders, and the mass of the conductive agent is optionally any one of 96:2:2, 96:3:1, 97:1:2, and 98:1:1.

The positive electrode slurry within the above range not only has good processability, but also makes the formed positive electrode plate have excellent electrochemical performance.

In some embodiments, the positive electrode active material is one or more of lithium iron phosphate, lithium cobalt oxide, lithium manganate, and lithium nickel cobalt manganese oxide.

The above-mentioned positive electrode active material enables the battery to have high energy density, which is conducive to improving the cycling performance of the battery.

In some embodiments, the conductive agent is one or more of conductive carbon black, graphite, and carbon nanotubes.

The above-mentioned conductive agent is beneficial to improving the conductivity of the electrode plate.

### [Positive electrode plate]

The present application provides a positive electrode plate comprising a positive electrode current collector and a positive electrode film layer arranged on at least one surface of the positive electrode current collector, and the positive electrode film layer is prepared from the positive electrode slurry prepared by the preparation method of any of embodiments of the present application.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector may be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-comprising phosphates of olivine structure may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite.

In some embodiments, the binding force per unit length between the positive electrode film layer and the positive electrode current collector is 20 N/m to 30 N/m. In some embodiments, the binding force per unit length between the positive electrode film layer and the positive electrode current collector is optionally any one of 20 N/m, 21 N/m, 22 N/m, 23 N/m, 24 N/m, 25 N/m, 26 N/m, 26.5 N/m, 27 N/m, 27.5 N/m, 28 N/m, 29 N/m, 30 N/m.

In the present application, the test of the binding force per unit length between the positive electrode film layer and the positive electrode current collector can be carried out by using the method known in the art. For example, referring to the GB-T2790-1995 national standard "Adhesives - 180° Peel Strength Test Method", a sample with a width of 30 mm and a length of 100-160 mm is cut out by a blade, and a special double-sided adhesive tape is pasted on a steel plate, the adhesive tape has a width of 20 mm and a length of 90-150 mm. The positive electrode film layer of the electrode plate sample cut out earlier is pasted on a double-sided adhesive tape, and then rolled three times in the same direction with a 2 kg press roll. A paper tape with the same width as the electrode plate and a length of 250 mm is fixed on the electrode plate current collector, and fixed with crepe adhesive. The power of the SUNS tensile machine (sensitivity, 1 N) is turned on, the indicator light is on, the position-limiting block is adjusted to an appropriate position, and the end of the steel plate that is not pasted with the electrode plate is fixed with the lower clamp. The paper tape is folded upward and fixed with the upper clamp. The position of the upper clamp is adjusted using the "up" and "down" buttons on the manual controller provided on the tensile machine. Then a test is carried out and the value is read. The stretching speed is 50 mm/min. The force on the electrode plate under balanced force is divided by the width of the adhesive tape, which is used as the binding force of the electrode plate per unit length to characterize the binding strength between the positive electrode film layer and the current collector.

In some embodiments, the shear strength of the positive electrode film layer is 0.64 mPa to 0.91 mPa. In some embodiments, the shear strength of the positive electrode film layer is optionally any one of 0.64 mPa, 0.68 mPa, 0.72 mPa, 0.74 mPa, 0.78 mPa, 0.80 mPa, 0.81 mPa, 0.83 mPa, 0.86 mPa, 0.88 mPa, 0.90 mPa, 0.91 mPa.

In the present application, the shear strength of the positive electrode film layer can be tested using methods known in the art, such as using a tensile machine, where a double-sided adhesive tape with a length of about 60 mm is cut out, and the double-sided adhesive tape is pasted along the longitudinal direction of the electrode plate, the electrode plate is cut out with a blade along the edge of the double-sided adhesive tape; a steel plate with a smooth appearance is selected, the surface of the steel plate is polished with sandpaper, the surface of the steel plate is wiped with cotton gauze dipped with alcohol, and oven dried; the double-sided adhesive tape is pasted on the steel plate, and the distance between the bottom edge of the adhesive tape and the bottom edge of the steel plate is >1cm, the steel plate is placed in an oven at 60-80°C for 5 min, the steel plate is taken out, and the upper release paper of the adhesive tape is gently scraped off with a blade; the electrode plate cut out previously is pasted on the double-sided adhesive tape of the steel plate, with the test surface facing down; it is rolled back and forth 3 times using a 2 kg press roll; the power of the SUNS tensile machine is turned on, the indicator light is on, the position-limiting block is adjusted to an appropriate position, the end of the steel plate that is not pasted with the electrode plate is fixed with the lower clamp, the end of the electrode plate that is not pasted with the steel plate is fixed with the upper clamp; then test is carried out and the value is read, the stretching speed is 10 mm/min.

**In** some embodiments, the cohesion of the positive electrode film layer is 70 N/m to 90 N/m. **In** some embodiments, the cohesion of the positive electrode film layer is optionally any one of 72 N/m, 74 N/m, 76 N/m, 78 N/m, 80 N/m, 82 N/m, 84 N/m, 86 N/m, 88 N/m, 90 N/m.

**In** the present application, the cohesion of the positive electrode film layer can be tested using methods known in the art, for example, using a tensile machine, where an electrode plate sample with a width of 30 mm and a length of 90-150 mm is cut out with a blade; a special double-sided adhesive tape with a width of 20 mm and a length of 90-150 mm is cut out, and the cut-out special double-sided adhesive tape is pasted on a steel plate; the cut-out electrode plate sample is pasted on the cut-out double-sided adhesive tape, with the test surface facing upward; a low-viscosity green adhesive tape with a width of 20 mm and a length greater than the length of the sample by 80-200 mm is pasted flatly on the surface of the test surface, and rolled three times in the same direction with a press roll; the power of the SUNS tensile machine is turned on, the indicator light is on, the position-limiting block is adjusted to an appropriate position; the end of the steel plate that is not pasted with the electrode plate is fixed with the lower clamp; the green adhesive tape pasted with the hard paper is folded upward, fixed with the upper clamp, and the position of the upper clamp is adjusted using the "up" and "down" buttons on the manual controller provided on the tensile machine; then test is carried out and the value is read, the stretching speed is 10 mm/min.

**In** some embodiments, the positive electrode plate may be prepared by: dispersing the above components for preparing the positive electrode plate, such as the positive electrode active material, the conductive agent, the binder, and the solvent (such as N-methyl pyrrolidone) are prepared into a positive electrode slurry using the preparation method of the positive electrode slurry in any of embodiments of the present application; and coating the prepared positive electrode slurry on the positive electrode current collector, carrying out oven drying, cold pressing and other processes to provide the positive electrode plate.

### [Negative electrode plate]

The negative electrode plate includes a negative electrode current collector and a negative electrode film layer arranged on at least one surface of the negative electrode current collector, wherein the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft bag may be a plastic, and examples of the plastic may include polypropylene, polybutylene terephthalate, polybutylene succinate, and the like.

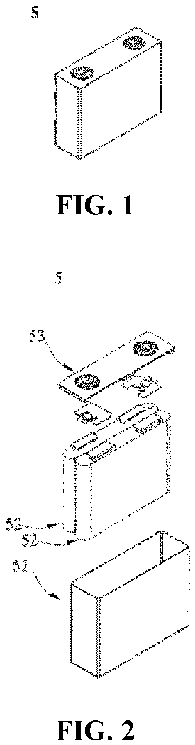

The shape of the secondary battery is not particularly limited in the present application, and may be a cylinder, a square, or any other shape. For example, Fig. 1 shows a secondary battery 5 with a square structure as an example.

In some embodiments, referring to Fig. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

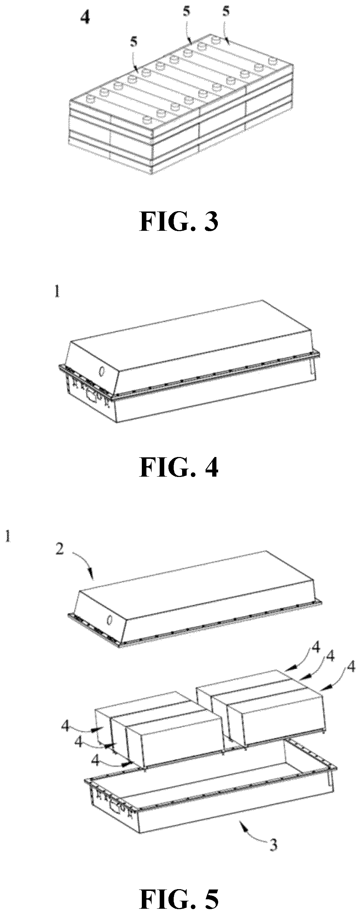

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

Figs. 4 and 5 show a battery pack 1 as an example. Referring to Figs. 4 and 5, the battery pack 1 may comprise a battery box and a plurality of battery modules 4 provided in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, comprising at least one of the secondary batteries, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

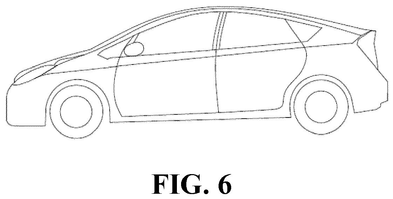

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

### EXAMPLES

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

### Example 1

### Preparation of positive electrode slurry

Weighing the raw materials: 1200 kg of lithium iron phosphate as the positive electrode active material, 25 kg of polyvinylidene fluoride as the binder, and 25 kg of conductive carbon black as the conductive agent were weighed for later use, wherein the weight average molecular weight of polyvinylidene fluoride is 1.8 million;

First stirring: 720 kg of lithium iron phosphate and 10 kg of polyvinylidene fluoride were mixed in a double planetary stirrer for the first stirring; in the first stirring, the revolution velocity is 15 rpm, the rotation velocity is 0, the stirring time is 15 min; a dry mixture was obtained;

Second stirring: 15 kg of polyvinylidene fluoride and 437.5 kg of N-methylpyrrolidone (NMP) as the solvent were mixed in a double planetary stirrer for the second stirring, the revolution velocity of the stirring is 25 rpm, the rotation velocity is 1200 rpm, the stirring time is 70 min; an adhesive solution was obtained;

Third stirring: The dry mixture prepared by the first stirring was added to the adhesive solution prepared by the second stirring for the third stirring; the revolution velocity of the stirring is 25 rpm, the rotation velocity is 600 rpm, and the stirring time is 50 min; a primary slurry was obtained;

Fourth stirring: 480 kg of lithium iron phosphate, 25 kg of conductive carbon black and 125 kg of N-methylpyrrolidone (NMP) as the solvent were added to the primary slurry prepared by the third stirring for the fourth stirring; the revolution velocity of the stirring is 25 rpm, the rotation velocity is 1300 rpm, the stirring time is 110 min; a positive electrode slurry with a solid content of 68% was obtained.

### Examples 2 to 7

They are basically the same as Example 1, except that the weight average molecular weight of the polyvinylidene fluoride binder is adjusted. See Table 1 for specific parameters.

### Examples 8 to 10

They are basically the same as Example 1, except that a variety of binders with different weight average molecular weights are added. See Table 1 for specific parameters. In Example 8, the mass ratio of polyvinylidene fluoride with a weight average molecular weight of 1 million to polyvinylidene fluoride with a weight average molecular weight of 8 million is 1:1. In Example 9, the mass ratio between polyvinylidene fluoride with a weight average molecular weight of 1 million, polyvinylidene fluoride with a weight average molecular weight of 4 million, and polyvinylidene fluoride with a weight average molecular weight of 8 million is 1:1:1. In Example 10, the mass ratio of polyvinylidene fluoride with a weight average molecular weight of 1.8 million to polyvinylidene fluoride with a weight average molecular weight of 6 million is 1:1.

### Examples 11 to 14

They are basically the same as Example 2, except that the mass content of the polyvinylidene fluoride binder in the first stirring is adjusted. See Table 1 for specific parameters.

### Examples 15 to 60

They are basically the same as Example 2, except that the stirring parameters are adjusted. See Table 1 for specific parameters.

### Examples 61 to 64

They are basically the same as Example 2, except that the mass content of lithium iron phosphate in the first stirring is adjusted. See Table 1 for specific parameters.

### Comparative Example 1

Weighing the raw materials: 1200 kg of lithium iron phosphate as the positive electrode active material, 25 kg of polyvinylidene fluoride as the binder, and 25 kg of conductive carbon black as the conductive agent were weighed for later use, wherein the weight average molecular weight of polyvinylidene fluoride is 1.8 million;

First stirring: 1200 kg of lithium iron phosphate and 25 kg of conductive carbon black were mixed and stirred sufficiently, the revolution velocity of the stirring is 15 rpm, the rotation velocity is 0, the stirring time is 15 min; a dry mixture was obtained;

Second stirring: 25 kg of polyvinylidene fluoride was added to 437.5 kg of NMP solvent, stirred sufficiently, the revolution velocity of the stirring is 25 rpm, the rotation velocity is 1200 rpm, the stirring time is 70 min; an adhesive solution was obtained;

Third stirring: The dry mixture was added to the adhesive solution, and stirred sufficiently, the revolution velocity of the stirring is 25 rpm, the rotation velocity is 600 rpm, the mixing time is 50 min; a primary slurry was obtained;

Fourth stirring: 125 kg of NMP as the solvent was added to the above primary slurry and stirred; the revolution velocity of the stirring is 25 rpm, the rotation velocity is 1300 rpm, the stirring time is 110 min; a positive electrode slurry with a solid content of 68% was obtained.

### Comparative Examples 2 to 5

The are basically the same as Comparative Example 1, except that the weight average molecular weights of polyvinylidene fluoride are 2 million, 3 million, 4 million, and 8 million respectively. See Table 1 for specific parameters.

### II. Test methods

### 1. Test of viscosity of positive electrode slurry

The viscosity of the primer slurry is measured using a rotational viscometer. A suitable rotor is selected, the viscometer rotor is fixed, and the primer slurry is placed under the viscometer rotor so that the slurry just submerges the scale line of the rotor. Instrument model: Shanghai Fangrui NDJ-5S. To measure the slurry viscosity of 2000-10000 mPa·s, No. 63 rotor is used, and to measure the slurry viscosity of 10000-50000 mPa·s, No. 64 rotor is used. The rotational velocity is 12 rpm, the test temperature is 25°C, and the test time is 5 min. The data is read after it becomes stable.

### 2. Test of binding force of electrode plate

Referring to the GB-T2790-1995 national standard "Adhesives - 180° Peel Strength Test Method", the test process of binding force in the examples and comparative examples of the present application is as follows: a sample with a width of 30 mm and a length of 100-160 mm is cut out by a blade, and a special double-sided adhesive tape is pasted on a steel plate, the adhesive tape has a width of 20 mm and a length of 90-150 mm. The positive electrode film layer of the electrode plate sample cut out earlier is pasted on a double-sided adhesive tape, and then rolled three times in the same direction with a 2 kg press roll. A paper tape with the same width as the electrode plate and a length of 250 mm is fixed on the electrode plate current collector, and fixed with crepe adhesive. The power of the SUNS tensile machine (sensitivity, 1 N) is turned on, the indicator light is on, the position-limiting block is adjusted to an appropriate position, and the end of the steel plate that is not pasted with the electrode plate is fixed with the lower clamp. The paper tape is folded upward and fixed with the upper clamp. The position of the upper clamp is adjusted using the "up" and "down" buttons on the manual controller provided on the tensile machine. Then a test is carried out and the value is read. The stretching speed is 50 mm/min. The force on the electrode plate under balanced force is divided by the width of the adhesive tape, which is used as the binding force of the electrode plate per unit length to characterize the binding strength between the positive electrode film layer and the current collector.

### 3. Test of shear strength of electrode plate

A double-sided adhesive tape with a length of about 60 mm is cut out, and the double-sided adhesive tape is pasted along the longitudinal direction of the electrode plate, the electrode plate is cut out with a blade along the edge of the double-sided adhesive tape; a steel plate with a smooth appearance is selected, the surface of the steel plate is polished with sandpaper, the surface of the steel plate is wiped with cotton gauze dipped with alcohol, and oven dried; the double-sided adhesive tape is pasted on the steel plate, and the distance between the bottom edge of the adhesive tape and the bottom edge of the steel plate is >1cm, the steel plate is placed in an oven at 60-80°C for 5 min, the steel plate is taken out, and the upper release paper of the adhesive tape is gently scraped off with a blade; the electrode plate cut out previously is pasted on the double-sided adhesive tape of the steel plate, with the test surface facing down; it is rolled back and forth 3 times using a 2 kg press roll; the power of the SUNS tensile machine is turned on, the indicator light is on, the position-limiting block is adjusted to an appropriate position, the end of the steel plate that is not pasted with the electrode plate is fixed with the lower clamp, the end of the electrode plate that is not pasted with the steel plate is fixed with the upper clamp; then test is carried out and the value is read, the stretching speed is 10 mm/min.

### 4. Test of cohesion of electrode plate

An electrode plate sample with a width of 30 mm and a length of 90-150 mm is cut out with a blade; a special double-sided adhesive tape with a width of 20 mm and a length of 90-150 mm is cut out, and the cut-out special double-sided adhesive tape is pasted on a steel plate; the cut-out electrode plate sample is pasted on the cut-out double-sided adhesive tape, with the test surface facing upward; a low-viscosity green adhesive tape with a width of 20 mm and a length greater than the length of the sample by 80-200 mm is pasted flatly on the surface of the test surface, and rolled three times in the same direction with a press roll; the power of the SUNS tensile machine is turned on, the indicator light is on, the position-limiting block is adjusted to an appropriate position; the end of the steel plate that is not pasted with the electrode plate is fixed with the lower clamp; the green adhesive tape pasted with the hard paper is folded upward, fixed with the upper clamp, and the position of the upper clamp is adjusted using the "up" and "down" buttons on the manual controller provided on the tensile machine; then test is carried out and the value is read, the stretching speed is 10 mm/min.

### III. Analysis on test results of each example and comparative example

The positive electrode slurries of the examples and comparative examples were prepared according to the above method, and various parameters thereof were measured. The results are shown in Table 1 below.

**Table 1: Preparation parameters and test results of examples and comparative examples**

| No. | Binder | First stirring | Second stirring | Third stirring | Fourth stirring | Positive electrode | Electrode plate | | | | | | | | | | | | |
|---|---|---|---|---|---|---|---|---|---|---|---|---|---|---|---|---|---|---|---|
| | | | | | | | | | | | | | | | | slurry | | | |
| | PVDF weight average molecular weight /ten thousand | Mass content of positive electrode active material | Mass content of binder | Time /min | Revolution velocity /rpm | Rotation velocity /rpm | Time/ min | Revolution velocity /rpm | Rotation velocity /rpm | Time/ min | Revolution velocity /rpm | Rotation velocity /rpm | Time/ min | Revolution velocity /rpm | Rotation velocity /rpm | Viscosity /rnPa·s | Binding force N/m | Shear strength /mPa | Cohesion N/m |
| Example 1 | 180 | 60% | 40% | 15 | 15 | 0 | 70 | 25 | 1200 | 50 | 25 | 600 | 110 | 25 | 1300 | 14000 | 28.97 | 0.85 | 88.76 |
| Example 2 | 200 | 60% | 40% | 15 | 15 | 0 | 70 | 25 | 1200 | 50 | 25 | 600 | 110 | 25 | 1300 | 19000 | 27.98 | 0.88 | 87.69 |
| Example 3 | 300 | 60% | 40% | 15 | 15 | 0 | 70 | 25 | 1200 | 50 | 25 | 600 | 110 | 25 | 1300 | 23000 | 29.39 | 0.9 | 86.84 |
| Example 4 | 400 | 60% | 40% | 15 | 15 | 0 | 70 | 25 | 1200 | 50 | 25 | 600 | 110 | 25 | 1300 | 31000 | 28.68 | 0.91 | 88.48 |
| Example 5 | 600 | 60% | 40% | 15 | 15 | 0 | 70 | 25 | 1200 | 50 | 25 | 600 | 110 | 25 | 1300 | 34000 | 27.56 | 0.79 | 88.21 |
| Example 6 | 800 | 60% | 40% | 15 | 15 | 0 | 70 | 25 | 1200 | 50 | 25 | 600 | 110 | 25 | 1300 | 35000 | 26.48 | 0.81 | 78.84 |
| Example 7 | 100 | 60% | 40% | 15 | 15 | 0 | 70 | 25 | 1200 | 50 | 25 | 600 | 110 | 25 | 1300 | 9000 | 28.84 | 0.78 | 80.38 |
| Example 8 | 100+8 00 | 60% | 40% | 15 | 15 | 0 | 70 | 25 | 1200 | 50 | 25 | 600 | 110 | 25 | 1300 | 31000 | 26.97 | 0.82 | 7938 |
| Example 9 | 100+400 +800 | % | 40% | 15 | 15 | 0 | 70 | 25 | 1200 | 50 | 25 | 600 | 110 | 25 | 1300 | 33500 | 27.44 | 0.74 | 77.76 |
| Example 10 | 180+60 | 60% | 40% | 15 | 15 | 0 | 70 | 25 | 1200 | 50 | 25 | 600 | 110 | 25 | 1300 | 29000 | 24.62 | 0.84 | 83.41 |
| Example 11 | 200 | 60% | 20% | 15 | 15 | 0 | 70 | 25 | 1200 | 50 | 25 | 600 | 110 | 25 | 1300 | 12000 | 17.97 | 0.69 | 69.39 |
| Example 12 | 200 | 60% | 30% | 15 | 15 | 0 | 70 | 25 | 1200 | 50 | 25 | 600 | 110 | 25 | 1300 | 14000 | 24.41 | 0.75 | 76.54 |
| Example 13 | 200 | 60% | 50% | 15 | 15 | 0 | 70 | 25 | 1200 | 50 | 25 | 600 | 110 | 25 | 1300 | 24000 | 24.58 | 0.74 | 7497 |
| Example 14 | 200 | 60% | 60% | 15 | 15 | 0 | 70 | 25 | 1200 | 50 | 25 | 600 | 110 | 25 | 1300 | 38000 | 18.85 | 0.65 | 66.48 |
| Example 15 | 200 | 60% | 40% | 15 | 5 | 0 | 70 | 25 | 1200 | 50 | 25 | 600 | 110 | 25 | 1300 | 39000 | 11.05 | 0.49 | 69.76 |
| Example 16 | 200 | 60% | 40% | 15 | 10 | 0 | 70 | 25 | 1200 | 50 | 25 | 600 | 110 | 25 | 1300 | 33000 | 21.35 | 0.74 | 75.49 |
| Example 17 | 200 | 60% | 40% | 15 | 20 | 0 | 70 | 25 | 1200 | 50 | 25 | 600 | 110 | 25 | 1300 | 16000 | 24.19 | 0.84 | 8766 |
| Example 18 | 200 | 60% | 40% | 15 | 25 | 0 | 70 | 25 | 1200 | 50 | 25 | 600 | 110 | 25 | 1300 | 24000 | 18.72 | 0.68 | 68.28 |
| Example 19 | 200 | 60% | 40% | 5 | 15 | 0 | 70 | 25 | 1200 | 50 | 25 | 600 | 110 | 25 | 1300 | 37000 | 15.62 | 0.57 | 63.59 |
| Example 20 | 200 | 60% | 40% | 10 | 15 | 0 | 70 | 25 | 1200 | 50 | 25 | 600 | 110 | 25 | 1300 | 34000 | 20.14 | 0.71 | 72.43 |
| Example 21 | 200 | 60% | 40% | 20 | 15 | 0 | 70 | 25 | 1200 | 50 | 25 | 600 | 110 | 25 | 1300 | 14000 | 25.87 | 0.79 | 81.38 |
| Example 22 | 200 | 60% | 40% | 25 | 15 | 0 | 70 | 25 | 1200 | 50 | 25 | 600 | 110 | 25 | 1300 | 24000 | 20.12 | 0.67 | 67.49 |
| Example 23 | 200 | 60% | 40% | 15 | 15 | 0 | 70 | 15 | 1200 | 50 | 25 | 600 | 110 | 25 | 1300 | 41000 | 11.94 | 0.38 | 59.75 |
| Example 24 | 200 | 60% | 40% | 15 | 15 | 0 | 70 | 20 | 1200 | 50 | 25 | 600 | 110 | 25 | 1300 | 20000 | 22.14 | 0.78 | 75.39 |
| Example 25 | 200 | 60% | 40% | 15 | 15 | 0 | 70 | 30 | 1200 | 50 | 25 | 600 | 110 | 25 | 1300 | 13000 | 25.87 | 0.84 | 85.48 |
| Example 26 | 200 | 60% | 40% | 15 | 15 | 0 | 70 | 35 | 1200 | 50 | 25 | 600 | 110 | 25 | 1300 | 12000 | 18.45 | 0.68 | 69.58 |
| Example 27 | 200 | 60% | 40% | 15 | 15 | 0 | 70 | 25 | 1000 | 50 | 25 | 600 | 110 | 25 | 1300 | 36000 | 16.38 | 0.67 | 68.74 |
| Example 28 | 200 | 60% | 40% | 15 | 15 | 0 | 70 | 25 | 1100 | 50 | 25 | 600 | 110 | 25 | 1300 | 21000 | 25.59 | 0.74 | 79.48 |
| Example 29 | 200 | 60% | 40% | 15 | 15 | 0 | 70 | 25 | 1300 | 50 | 25 | 600 | 110 | 25 | 1300 | 12000 | 27.73 | 0.82 | 84.96 |
| Example 30 | 200 | 60% | 40% | 15 | 15 | 0 | 70 | 25 | 1400 | 50 | 25 | 600 | 110 | 25 | 1300 | 11000 | 27.78 | 0.86 | 8988 |
| Example 31 | 200 | 60% | 40% | 15 | 15 | 0 | 50 | 25 | 1200 | 50 | 25 | 600 | 110 | 25 | 1300 | 40000 | 10.83 | 0.49 | 68.92 |
| Example 32 | 200 | 60% | 40% | 15 | 15 | 0 | 60 | 25 | 1200 | 50 | 25 | 600 | 110 | 25 | 1300 | 32000 | 22.14 | 0.73 | 76.58 |
| Example 33 | 200 | 60% | 40% | 15 | 15 | 0 | 80 | 25 | 1200 | 50 | 25 | 600 | 110 | 25 | 1300 | 13000 | 25.48 | 0.81 | 86.38 |
| Example 34 | 200 | 60% | 40% | 15 | 15 | 0 | 90 | 25 | 1200 | 50 | 25 | 600 | 110 | 25 | 1300 | 12000 | 26.76 | 0.84 | 88.16 |
| Example 35 | 200 | 60% | 40% | 15 | 15 | 0 | 70 | 25 | 1200 | 50 | 15 | 600 | 110 | 25 | 1300 | 36500 | 13.59 | 0.54 | 62.49 |
| Example 36 | 200 | 60% | 40% | 15 | 15 | 0 | 70 | 25 | 1200 | 50 | 20 | 600 | 110 | 25 | 1300 | 18000 | 23.45 | 0.78 | 79.94 |
| Example 37 | 200 | 60% | 40% | 15 | 15 | 0 | 70 | 25 | 1200 | 50 | 30 | 600 | 110 | 25 | 1300 | 12000 | 27.97 | 0.82 | 86.49 |
| Example 38 | 200 | 60% | 40% | 15 | 15 | 0 | 70 | 25 | 1200 | 50 | 35 | 600 | 110 | 25 | 1300 | 12000 | 27.03 | 0.78 | 82.35 |
| Example 39 | 200 | 60% | 40% | 15 | 15 | 0 | 70 | 25 | 1200 | 50 | 25 | 400 | 110 | 25 | 1300 | 39000 | 14.97 | 0.57 | 64.39 |
| Example 40 | 200 | 60% | 40% | 15 | 15 | 0 | 70 | 25 | 1200 | 50 | 25 | 500 | 110 | 25 | 1300 | 20000 | 23.49 | 0.72 | 78.36 |
| Example 41 | 200 | 60% | 40% | 15 | 15 | 0 | 70 | 25 | 1200 | 50 | 25 | 700 | 110 | 25 | 1300 | 14000 | 26.84 | 0.83 | 82.31 |
| Example 42 | 200 | 60% | 40% | 15 | 15 | 0 | 70 | 25 | 1200 | 50 | 25 | 800 | 110 | 25 | 1300 | 13000 | 25.68 | 0.85 | 8764 |
| Example 43 | 200 | 60% | 40% | 15 | 15 | 0 | 70 | 25 | 1200 | 50 | 25 | 900 | 110 | 25 | 1300 | 13000 | 26.13 | 0.85 | 86.39 |
| Example 44 | 200 | 60% | 40% | 15 | 15 | 0 | 70 | 25 | 1200 | 30 | 25 | 600 | 110 | 25 | 1300 | 38000 | 15.52 | 0.59 | 62.49 |
| Example 45 | 200 | 60% | 40% | 15 | 15 | 0 | 70 | 25 | 1200 | 40 | 25 | 600 | 110 | 25 | 1300 | 19000 | 24.64 | 0.81 | 87.76 |
| Example 46 | 200 | 60% | 40% | 15 | 15 | 0 | 70 | 25 | 1200 | 60 | 25 | 600 | 110 | 25 | 1300 | 13000 | 28.48 | 0.87 | 85.68 |
| Example 47 | 200 | 60% | 40% | 15 | 15 | 0 | 70 | 25 | 1200 | 70 | 25 | 600 | 110 | 25 | 1300 | 12000 | 28.46 | 0.86 | 89.28 |
| Example 48 | 200 | 60% | 40% | 15 | 15 | 0 | 70 | 25 | 1200 | 50 | 25 | 600 | 110 | 15 | 1300 | 35000 | 14.98 | 0.56 | 60.48 |
| Example 49 | 200 | 60% | 40% | 15 | 15 | 0 | 70 | 25 | 1200 | 50 | 25 | 600 | 110 | 20 | 1300 | 19000 | 24.58 | 0.76 | 7984 |
| Example 50 | 200 | 60% | 40% | 15 | 15 | 0 | 70 | 25 | 1200 | 50 | 25 | 600 | 110 | 30 | 1300 | 13000 | 27.85 | 0.86 | 82.49 |
| Example 51 | 200 | 60% | 40% | 15 | 15 | 0 | 70 | 25 | 1200 | 50 | 25 | 600 | 110 | 35 | 1300 | 13000 | 28.27 | 0.86 | 88.48 |
| Example 52 | 200 | 60% | 40% | 15 | 15 | 0 | 70 | 25 | 1200 | 50 | 25 | 600 | 110 | 25 | 1000 | 38500 | 14.67 | 0.64 | 66.49 |
| Example 53 | 200 | 60% | 40% | 15 | 15 | 0 | 70 | 25 | 1200 | 50 | 25 | 600 | 110 | 25 | 1100 | 26000 | 21.68 | 0.73 | 79.78 |
| Example 54 | 200 | 60% | 40% | 15 | 15 | 0 | 70 | 25 | 1200 | 50 | 25 | 600 | 110 | 25 | 1200 | 17000 | 24.63 | 0.81 | 84.95 |
| Example 55 | 200 | 60% | 40% | 15 | 15 | 0 | 70 | 25 | 1200 | 50 | 25 | 600 | 110 | 25 | 1400 | 13000 | 27.98 | 0.86 | 87.47 |
| Example 56 | 200 | 60% | 40% | 15 | 15 | 0 | 70 | 25 | 1200 | 50 | 25 | 600 | 110 | 25 | 1500 | 13000 | 28.12 | 0.85 | 83.29 |
| Example 57 | 200 | 60% | 40% | 15 | 15 | 0 | 70 | 25 | 1200 | 50 | 25 | 600 | 90 | 25 | 1300 | 37500 | 18.74 | 0.67 | 65.78 |
| Example 58 | 200 | 60% | 40% | 15 | 15 | 0 | 70 | 25 | 1200 | 50 | 25 | 600 | 100 | 25 | 1300 | 20000 | 25.45 | 0.78 | 79.83 |
| Example 59 | 200 | 60% | 40% | 15 | 15 | 0 | 70 | 25 | 1200 | 50 | 25 | 600 | 120 | 25 | 1300 | 13000 | 26.68 | 0.85 | 82.59 |
| Example 60 | 200 | 60% | 40% | 15 | 15 | 0 | 70 | 25 | 1200 | 50 | 25 | 600 | 130 | 25 | 1300 | 13000 | 27.48 | 0.86 | 84.63 |
| Example 61 | 200 | 40% | 40% | 15 | 15 | 0 | 70 | 25 | 1200 | 50 | 25 | 600 | 110 | 25 | 1300 | 38000 | 12.17 | 0.45 | 65.74 |
| Example 62 | 200 | 50% | 40% | 15 | 15 | 0 | 70 | 25 | 1200 | 50 | 25 | 600 | 110 | 25 | 1300 | 32000 | 25.68 | 0.79 | 78.19 |
| Example 63 | 200 | 70% | 40% | 15 | 15 | 0 | 70 | 25 | 1200 | 50 | 25 | 600 | 110 | 25 | 1300 | 23000 | 26.12 | 0.79 | 87.03 |
| Example 64 | 200 | 80% | 40% | 15 | 15 | 0 | 70 | 25 | 1200 | 50 | 25 | 600 | 110 | 25 | 1300 | 35500 | 15.59 | 0.53 | 68.38 |
| Comparative Example 1 | 180 | \ | \ | 15 | 15 | 0 | 70 | 25 | 1200 | 50 | 25 | 600 | 110 | 25 | 1300 | 32000 | 21.04 | 0.73 | 76.48 |
| Comparative Example 2 | 200 | \ | \ | 15 | 15 | 0 | 70 | 25 | 1200 | 50 | 25 | 600 | 110 | 25 | 1300 | 35000 | 18.73 | 0.63 | 68.82 |
| Comparative Example 3 | 300 | \ | \ | 15 | 15 | 0 | 70 | 25 | 1200 | 50 | 25 | 600 | 110 | 25 | 1300 | 48000 | Fail to coat | Fail to coat | Fail to coat |
| Comparative Example 4 | 400 | \ | \ | 15 | 15 | 0 | 70 | 25 | 1200 | 50 | 25 | 600 | 110 | 25 | 1300 | Out-of-range | Fail to coat | Fail to coat | Fail to coat |
| Comparative Example 5 | 800 | \ | \ | 15 | 15 | 0 | 70 | 25 | 1200 | 50 | 25 | 600 | 110 | 25 | 1300 | \ | \ | \ | \ |

According to the results in Table 1, it can be seen that the positive electrode slurries in Examples 1 to 64 are all prepared using the slurry preparation method disclosed in the present application, which includes a first stirring, a second stirring, a third stirring and a fourth stirring; in the first stirring, the lithium iron phosphate positive electrode active material and the polyvinylidene fluoride binder are mixed and stirred to prepare a dry mixture; in the second stirring, the polyvinylidene fluoride and N-methylpyrrolidone (NMP) solvent are mixed and stirred to prepare an adhesive solution; in the third stirring, the dry mixture prepared by the first stirring and the adhesive solution prepared by the second stirring are mixed and stirred to prepare a primary slurry; in the fourth stirring, lithium iron phosphate, conductive agent carbon black, NMP solvent and the primary slurry prepared by the third stirring are mixed and stirred to prepare a positive electrode slurry.

From the comparison of Examples 1 to 10 with Comparative Examples 1 to 4, it can be seen that the preparation method disclosed in the present application has wide versatility and is suitable for slurries comprising one or more polyvinylidene fluoride adhesives with a weight average molecular weight of 1 million to 8 million. The preparation method is universally applicable to low weight average molecular weight polyvinylidene fluoride binders and high weight average molecular weight polyvinylidene fluoride binders, and helps to reduce preparation costs and improve production efficiency.

It can be seen from Comparative Examples 3 to 5 that it is difficult to reduce the viscosity of the slurry using a polyvinylidene fluoride binder with a weight average molecular weight of 3 million in the preparation process in the prior art, resulting in failure to coat the slurry. The preparation method provided by the present application allows the slurry comprising a polyvinylidene fluoride binder with a weight average molecular weight of up to 8 million to still have an appropriate viscosity, and at the same time, the binding force, shear strength and cohesion of the electrode plate all meet product requirements and can meet the demand for the use of a new generation of high molecular weight binders.

It can be seen from Examples 8 to 10 that when the slurry synthesized by this preparation method comprises binders whose weight average molecular weight difference is within 7 million, the slurry can still maintain low viscosity and the electrode plate maintains high binding force, shear strength and cohesion.

It can be seen from the comparison between Examples 8 to 10 and Examples 5 to 6 that when the slurry synthesized by this preparation method comprises binder whose weight average molecular weight difference is within 7 million, compared with a slurry comprising only a single weight average molecular weight binder, the slurry comprising binders with different weight average molecular weights has further reduced viscosity and further improved binding force, shear strength or cohesion.

It can be seen from Example 2 and Examples 11 to 14 that when the proportion of the polyvinylidene fluoride binder added in the first stirring is controlled to be 30% to 50% of the total mass of the polyvinylidene fluoride binders, this preparation method ensures that the slurry has suitable viscosity, and at the same time, the binding force, shear strength and cohesion of the electrode plate are improved, which broadens the electrode plate preparation process window while improving the binding performance of the electrode plate.

As can be seen from Example 2 and Examples 15 to 18, controlling the revolution velocity of the first stirring to be 10 rpm to 20 rpm can not only ensure that the slurry viscosity is within a suitable range, but also ensure that the electrode plate has high binding force, shear strength and cohesion, which broadens the electrode plate preparation process window while improving the binding performance of the electrode plate.

As can be seen from Example 2 and Examples 19 to 22, controlling the stirring time of the first stirring to be 10 min to 20 min can not only ensure that the slurry viscosity is within a suitable range, but also ensure that the electrode plate has high binding force, shear strength and cohesion, which broadens the electrode plate preparation process window while improving the binding performance of the electrode plate.

As can be seen from Example 2 and Examples 23 to 26, controlling the revolution velocity of the second stirring to be 20 rpm to 30 rpm can not only ensure that the slurry viscosity is within a suitable range, but also ensure that the electrode plate has high binding force, shear strength and cohesion, which broadens the electrode plate preparation process window while improving the binding performance of the electrode plate.

As can be seen from Example 2 and Examples 27 to 30, controlling the rotation velocity of the second stirring to be 1100 rpm to 1300 rpm can not only ensure that the slurry viscosity is within a suitable range, but also ensure that the electrode plate has high binding force, shear strength and cohesion. It can also avoid excessive load on the equipment caused by excessive rotation velocity of the second stirring to affect the service life of the equipment, thereby reducing cost losses.

As can be seen from Example 2 and Examples 31 to 34, controlling the stirring time of the second stirring to be 60 min to 80 min can not only ensure that the slurry viscosity is within a suitable range, but also ensure that the electrode plate has high binding force, shear strength and cohesion. It can also avoid the reduction of production efficiency caused by too long stirring time of the second stirring, and save the production cost.

As can be seen from Example 2 and Examples 35 to 38, controlling the revolution velocity of the third stirring to be 20 rpm to 30 rpm can not only ensure that the slurry viscosity is within a suitable range, but also ensure that the electrode plate has high binding force, shear strength and cohesion. It can also avoid excessive load on the equipment caused by excessive revolution velocity of the third stirring to affect the service life of the equipment, thereby reducing cost losses.

As can be seen from Example 2 and Examples 39 to 43, controlling the rotation velocity of the third stirring to be 500 rpm to 800 rpm can not only ensure that the slurry viscosity is within a suitable range, but also ensure that the electrode plate has high binding force, shear strength and cohesion. It can also avoid excessive load on the equipment caused by excessive rotation velocity of the third stirring to affect the service life of the equipment, thereby reducing cost losses.

As can be seen from Example 2 and Examples 44 to 47, controlling the stirring time of the third stirring to be 40 min to 60 min can not only ensure that the slurry viscosity is within a suitable range, but also ensure that the electrode plate has high binding force, shear strength and cohesion. It can also avoid the reduction of production efficiency caused by too long stirring time of the third stirring, and save the production cost.

As can be seen from Example 2 and Examples 48 to 51, controlling the revolution velocity of the fourth stirring to be 20 rpm to 30 rpm can not only ensure that the slurry viscosity is within a suitable range, but also ensure that the electrode plate has high binding force, shear strength and cohesion. It can also avoid excessive load on the equipment caused by excessive revolution velocity of the fourth stirring to affect the service life of the equipment, thereby reducing cost losses.

As can be seen from Example 2 and Examples 52 to 56, controlling the rotation velocity of the fourth stirring to be 1100 rpm to 1400 rpm can not only ensure that the slurry viscosity is within a suitable range, but also ensure that the electrode plate has high binding force, shear strength and cohesion. It can also avoid excessive load on the equipment caused by excessive rotation velocity of the fourth stirring to affect the service life of the equipment, thereby reducing cost losses.

As can be seen from Example 2 and Examples 57 to 60, controlling the stirring time of the fourth stirring to be 100 min to 120 min can not only ensure that the slurry viscosity is within a suitable range, but also ensure that the electrode plate has high binding force, shear strength and cohesion. It can also avoid the reduction of production efficiency caused by too long stirring time of the fourth stirring, and save the production cost.

It can be seen from the examples that the viscosity of the positive electrode slurry with a solid content of 68% disclosed in the present application is 8000 mPa·s to 41000 mPa·s, and the positive electrode slurry has good coatability and processability.

It can be seen from Example 2 and Examples 61 to 64 that controlling the mass content of lithium iron phosphate used in the first stirring to be 50% to 70% can reduce the viscosity of the slurry and increase the binding force, shear strength and cohesion of the electrode plates, which broadens the process window of slurry coating while improving the performance of the electrode plate.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A preparation method of a positive electrode slurry, including a first stirring, a second stirring, a third stirring and a fourth stirring;
in the first stirring, a positive electrode active material and a binder are mixed and stirred to prepare a dry mixture;
in the second stirring, a binder and a solvent are mixed and stirred to prepare an adhesive solution;
in the third stirring, the dry mixture and the adhesive solution are mixed and stirred to prepare a primary slurry;
in the fourth stirring, a positive electrode active material, a conductive agent, a solvent and the primary slurry are mixed and stirred to prepare a positive electrode slurry;
the binder used in the first stirring is the same as the binder used in the second stirring.

2. The preparation method according to claim 1, wherein the binder comprises at least one polyvinylidene fluoride with a weight average molecular weight of 1 million to 8 million.

3. The preparation method according to claim 1 or 2, wherein the second binder comprises at least two kinds of polyvinylidene fluoride whose weight average molecular weight difference is not more than 7 million.

4. The preparation method according to any one of claims 1 to 3, wherein based on the total mass of the binder used in the first stirring and the binder used in the second stirring, the mass content of the binder used in the first stirring is 30%-50%, and the mass content of the binder used in the second stirring is 50%-70%.

5. The preparation method according to any one of claims 1 to 4, wherein the revolution velocity of the first stirring is 10 rpm to 20 rpm.

6. The preparation method according to any one of claims 1 to 5, wherein the rotation velocity of the first stirring is 0 rpm.

7. The preparation method according to any one of claims 1 to 6, wherein the stirring time of the first stirring is 10 min to 20 min.

8. The preparation method according to any one of claims 1 to 7, wherein the revolution velocity of the second stirring is 20 rpm to 30 rpm.

9. The preparation method according to any one of claims 1 to 8, wherein the rotation velocity of the second stirring is 1100 rpm to 1300 rpm.

10. The preparation method according to any one of claims 1 to 9, wherein the stirring time of the second stirring is 60 min to 80 min.

11. The preparation method according to any one of claims 1 to 10, wherein the revolution velocity of the third stirring is 20 rpm to 30 rpm.

12. The preparation method according to any one of claims 1 to 11, wherein the rotation velocity of the third stirring is 500 rpm to 800 rpm.

13. The preparation method according to any one of claims 1 to 12, wherein the stirring time of the third stirring is 40 min to 60 min.

14. The preparation method according to any one of claims 1 to 13, wherein the revolution velocity of the fourth stirring is 20 rpm to 30 rpm.

15. The preparation method according to any one of claims 1 to 14, wherein the rotation velocity of the fourth stirring is 1100 rpm to 1400 rpm.

16. The preparation method according to any one of claims 1 to 15, wherein the stirring time of the fourth stirring is 100 min to 120 min.

17. The preparation method according to any one of claims 1 to 16, wherein when the solid content of the positive electrode slurry is 68%, the viscosity of the positive electrode slurry is 8000 mPa·s to 41000 mPa· s.

18. The preparation method according to any one of claims 1 to 17, wherein the positive electrode active material used in the first stirring and the positive electrode active material used in the fourth stirring are the same, and based on the total mass of the positive electrode active material used in the first stirring and the positive electrode active material used in the fourth stirring, the mass content of the positive electrode active materials used in the first stirring is 50%-70%, and the mass content of the positive electrode active materials used in the fourth stirring is 30%-50%.

19. The preparation method according to any one of claims 1 to 18, wherein the solvent used in the second stirring and the solvent used in the fourth stirring are the same, and based on the total mass of the conductive agent, the positive electrode active material used in the first stirring, the positive electrode active material used in the fourth stirring, the binder used in the first stirring and the binder used in the second stirring, the mass content of the solvent used in the second stirring is 35%-40%, and the mass content of the solvent used in the fourth stirring is 5%-10%.

20. The preparation method according to any one of claims 1 to 19, wherein in the positive electrode slurry, the ratio between the total mass of the positive electrode active materials, the total mass of the binders, and the mass of the conductive agent is (86-98):(1-8):(1-6).

21. The preparation method according to any one of claims 1 to 20, wherein the positive electrode active material is one or more of lithium iron phosphate, lithium cobalt oxide, lithium manganate, and lithium nickel cobalt manganese oxide.

22. The preparation method according to any one of claims 1 to 21, wherein the conductive agent is one or more of conductive carbon black, graphite, and carbon nanotubes.

23. A positive electrode plate, comprising a positive electrode current collector and a positive electrode film layer arranged on at least one surface of the positive electrode current collector, wherein the positive electrode film layer is prepared from the positive electrode slurry prepared by the preparation method according to any one of claims 1 to 22.

24. The positive electrode plate according to claim 23, wherein the binding force per unit length between the positive electrode film layer and the positive electrode current collector is 20 N/m to 30 N/m.

25. The positive electrode plate according to claim 23 or 24, wherein the shear strength of the positive electrode film layer is 0.64 mPa to 0.91 mPa.

26. The positive electrode plate according to any one of claims 23 to 25, wherein the cohesion of the positive electrode film layer is 70 N/m to 90 N/m.

27. A secondary battery, comprising an electrode assembly and an electrolyte solution, wherein the electrode assembly comprises a separator, a negative electrode plate, and the positive electrolyte plate according to any one of claims 23 to 26.

28. The secondary battery according to claim 27, wherein the secondary battery is any one of a lithium-ion battery, a sodium-ion battery, a magnesium-ion battery, and a potassium-ion battery.

29. A battery module, comprising the secondary battery according to claim 27 or 28.

30. A battery pack, comprising at least one of the secondary batteries according to claim 27 or 28, and the battery module according to claim 29.

31. An electrical apparatus, comprising at least one of the secondary batteries according to claim 27 or 28, the battery module according to claim 29 or the battery pack according to claim 30.
